# FASCICULE DE BREVET EUROPEEN

(11) **EP 0 520 870 B1**
(45) Date de publication et mention de la délivrance du brevet: **06.08.1997**
(21) Numéro de dépôt: 92401733.8
(22) Date de dépôt: 19.06.1992
(51) Int. Cl.: B60G 3/26

(54) **Dispositif de suspension, notamment de suspension arrière multibras pour véhicule automobile**
Aufhängung, insbesondere eine Multilenkerhinterradaufhängung für ein Kraftfahrzeug
Suspension device, especially a multi-link rear suspension device for a motor vehicle

(30) Priorité: 25.06.1991 FR 9107808
(43) Date de publication de la demande: 30.12.1992
(73) Titulaire: AUTOMOBILES PEUGEOT, 75116 Paris (FR); AUTOMOBILES CITROEN, 92200 Neuilly-sur-Seine (FR)
(72) Inventeur: Froumajou, Armand, F-95110 Sannois (FR); Soulignac, Vincent, F-91140 Villeban/Yvette (FR); Pelcot, Alain, F-95250 Beauchamp (FR); Clement, Daniel, F-78170 La Celle Saint Cloud (FR)
(74) Mandataire: Durand, Yves Armand Louis

(56) Documents cités:
- DE-A- 3 924 942
- GB-A- 2 182 001
- GB-A- 2 198 398
- PATENT ABSTRACTS OF JAPAN vol. 14, no. 193 (M-963)19 Avril 1990 & JP-A-02 037 005 ( MAZDA ) 7 Février 1990
- PATENT ABSTRACTS OF JAPAN vol. 13, no. 484 (M-886)(3832) 2 Novembre 1989 & JP-A-01 190 513 ( MAZDA ) 31 Juillet 1989
- PATENT ABSTRACTS OF JAPAN vol. 14, no. 277 (M-985)(4220) 15 Juin 1990 & JP-A-02 085 003 ( TOYOTA ) 26 Mars 1990
- PATENT ABSTRACTS OF JAPAN vol. 12, no. 340 (M-740)(3187) 13 Septembre 1988 & JP-A-63 101 113 ( HONDA ) 6 Mai 1988

## Description

La présente invention concerne un dispositif de suspension, notamment de suspension arrière multibras pour véhicule automobile.

On connaît des dispositifs de suspension de roue arrière de véhicule automobile du type multibras tels que ceux décrits dans le brevet FR-A-2588217 ou la demande de brevet français 91/03402, maintenant publiée sous le numéro FR-A-2674107, appartenant aux demanderesses, dans lesquels un certain nombre de bras transversaux (en général trois) sont reliés de façon articulée d'une part à un support dans lequel est montée la fusée de roue arrière et, d'autre part, à la caisse du véhicule, et destinés à assurer le guidage de la roue. Ces dispositifs de suspension comprennent également de façon connue pour chaque roue, un bras dit de réaction au couple de freinage appliqué à la roue, s'étendant parallèlement à la direction longitudinale du véhicule et articulé par une extrémité sur la caisse du véhicule et, par son autre extrémité, en deux points sur ledit support de roue.

Or, dans la plupart des dispositifs de suspension connus, il n'est pas envisageable de disposer l'articulation de ce bras de réaction sur le support de roue au centre de la roue, compte tenu de la présence à cet endroit particulier d'organes tels que le disque ou le tambour de frein. Il en résulte que, lors de l'application du couple de freinage à la roue, l'effort de freinage exercé au niveau du sol dans le plan médian longitudinal de la roue engendre des forces de réaction au freinage qui produisent sur les bras transversaux de guidage soit des efforts de compression, soit des efforts de traction, se traduisant, par le jeu des déformations, par une rotation de la roue autour de l'axe d'articulation du bras de réaction sur le support conduisant à un microbraquage parasite de la roue diminuant en conséquence la précision de son guidage.

Le préambule de la revendication 1 correspond au document DE-A-3 924 942, mais dans ce dernier l'axe d'articulation du bras arrière sur le suport de roue est incliné par rapport à la verticale vers l'avant dans une direction descendante.

Le document GB-A-2 198 398 ne vise pas à supprimer les micro-braquages parasites lors du freinage, mais a pour but principal d'augmenter la souplesse de la roue suivant l'axe longitudinal du véhicule sans rendre instable l'angle de pincement de la roue.

La présente invention résout ces problèmes et propose un dispositif de suspension, notamment de suspension arrière multibras de véhicule automobile, de conception simple et permettant d'accroître la stabilité du véhicule en particulier lors du freinage.

A cet effet, la présente invention a pour objet un dispositif de suspension, notamment de suspension arrière multibras pour véhicule automobile, du type comprenant un bras de réaction aux efforts tels que les efforts de freinage, ledit bras étant articulé par l'une de ses extrémités sur la caisse du véhicule et, par son extrémité opposée, à un support de roue, dans lequel l'axe d'articulation du bras de réaction précité sur le support précité est incliné en direction du plan longitudinal médian de la roue et coupe la surface de roulement en un point situé au voisinage ou dans ce plan longitudinal médian de la roue, de façon que sous l'effet des forces de freinage, le couple de réation engendrant le pivotement de la roue autour dudit axe est supprimé, annulant de ce fait les risques de microbraquages de la roue, ledit axe d'articulation étant en outre incliné par rapport à un plan transversal vertical, caractérisé en ce que l'axe d'articulation du bras de réaction précité sur le support de roue est incliné vers le plan transversal médian de la roue contenant l'axe de roue et coupe les plans longitudinal et transversal médians de la roue sensiblement au centre de l'aire de contact du pneumatique avec le sol.

On voit déjà que, grâce à l'invention, l'axe d'articulation du bras de réaction sur le support coupe le plan longitudinal médian dans lequel sont concentrées, au niveau du sol, les forces de freinage.

Suivant une réalisation particulière de l'invention, le bras de réaction précité est articulé sur la caisse du véhicule en un point situé au voisinage de ou bien dans le plan longitudinal du véhicule contenant l'axe d'articulation du bras de réaction précité sur le support de roue précité.

On précisera encore que l'axe d'articulation du bras de réaction précité sur la caisse du véhicule coupe orthogonalement ou sensiblement orthogonalement le plan longitudinal du véhicule contenant l'axe d'articulation du bras de réaction sur le support de roue, ce qui permet d'éviter avantageusement l'emploi de butées latérales pour cette articulation.

L'axe d'articulation précité, reliant le bras de réaction au support de roue, coupe alors la surface de roulement en un point situé au voisinage ou dans ce plan transversal médian de la roue. Ainsi, le point d'intersection se rapproche avantageusement du centre de l'aire de contact du pneumatique avec le sol.

On précisera que le bras de réaction est relié de façon articulée au support de roue en deux points séparés définissant l'axe précité, et que le support de roue comporte deux parties formant cornes recevant l'axe d'articulation du bras de réaction sur le support de roue.

Suivant encore une autre caractéristique de l'invention, le dispositif comprend un bras transversal de guidage de la roue relié de façon articulée au support au niveau de l'un des deux points d'articulation du bras de réaction sur le support précité.

Mais d'autres buts, avantages, et caractéristiques de l'invention apparaîtront mieux dans la description détaillée qui suit et se réfère aux dessins annexés, donnés uniquement à titre d'exemples, et dans lesquels:
La figure 1 est une vue transversale d'une partie d'un train arrière d'un véhicule automobile, équipé du dispositif de suspension de l'invention dans une première forme de réalisation.
La figure 2 est une vue de côté de la figure précédente, dans un plan longitudinal du véhicule.
La figure 3 est une vue partielle et partiellement en coupe, illustrant plus particulièrement l'articulation du bras de réaction sur le support de roue.
La figure 4 est similaire à la figure 1, mais illustrant un second mode de réalisation de l'invention.

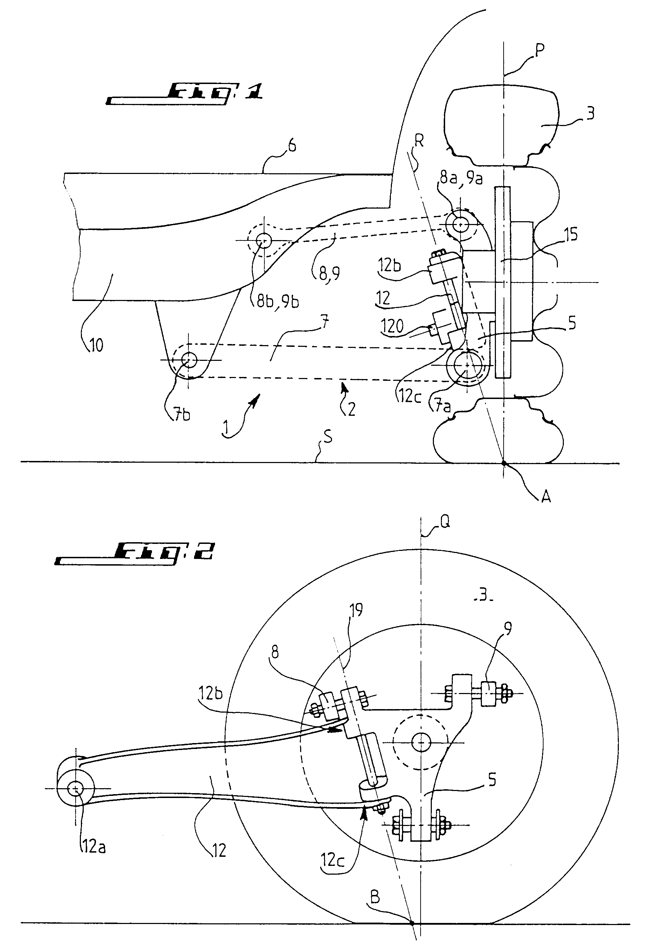

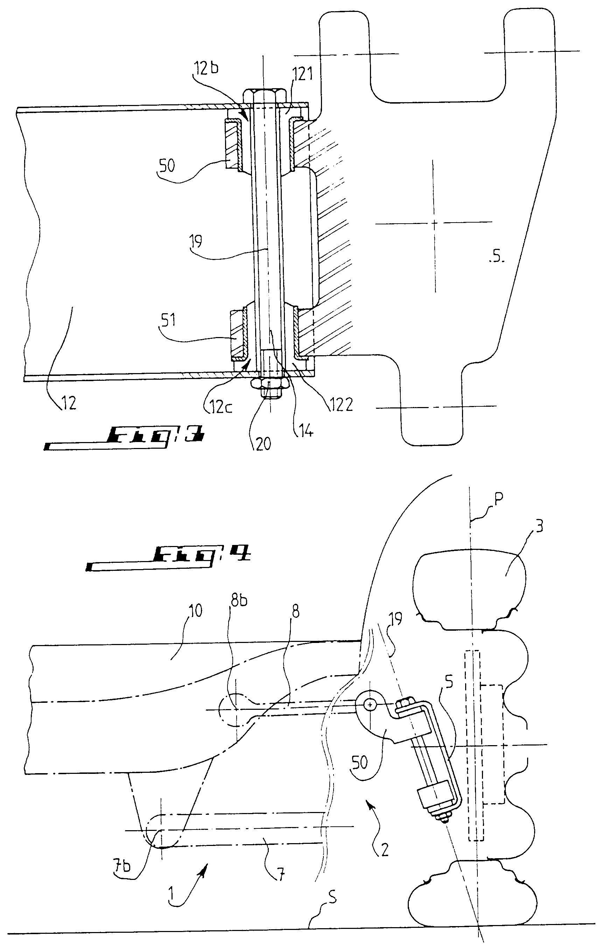

Sur les figures 1 et 2, on voit un dispositif de suspension 2 d'une roue 3 d'un train arrière 1 de véhicule automobile comprenant d'une part, trois bras de guidage transversaux 7, 8, 9 (dont deux seulement sont visibles sur ces figures) reliés de façon articulée 7b, 8b, 9b par l'une de leurs extrémités à une traverse 10, solidaire de la caisse 6 du véhicule, et par leurs extrémités opposées, également de façon articulée 7a, 8a, 9a, à un support 5 dans lequel sont montés d'une part la fusée de la roue (non représentée), d'autre part, un disque de freinage 15. Ce dispositif 2 comporte en outre un bras de réaction 12 également relié de façon articulée, par l'une de ses extrémités en 12a, à la caisse du véhicule 6 et par son autre extrémité en 12b, 12c au support précité 5 en deux points de celui-ci de façon à transmettre à la caisse le couple de freinage appliqué à la roue. Selon l'invention, l'axe d'articulation 19 commun aux deux articulations 12b, 12c reliant le bras de réaction précité 12 au support 5 est incliné en direction du plan longitudinal médian P de la roue 3 et coupe la surface de roulement S en un point A situé sensiblement dans ce plan P (comme ceci est particulièrement visible sur la figure 1). On voit également sur cette même figure d'une part, que le bras de réaction 12 se trouve dans le plan R contenant l'axe d'articulation précité 19 et parallèle à la direction longitudinale du véhicule et, d'autre part, que l'axe d'articulation 120 du bras de réaction 12 sur la caisse 6 du véhicule coupe orthogonalement ce plan précité R.

Sur la figure 2, plus particulièrement, on voit que l'axe d'articulation 19 du bras 12 sur le support 5 est en outre incliné en direction du plan transversal médian Q de la roue 3 de façon à ce que ledit axe 19 coupe les plans longitudinal P et transversal Q de la roue 3 au niveau du sol S en un point B correspondant sensiblement au centre de l'aire de contact du pneumatique avec le sol.

L'articulation du bras de réaction 12 sur le support 5 est plus spécialement représentée sur la figure 3. Ainsi, on voit sur cette figure que l'extrémité du bras de réaction 12 prend en chape deux extrémités, par exemple en forme de cornes, 50 et 51 du support de roue, la liaison entre le bras 12 et le support de roue 5 étant assurée par des articulations élastiques 12b et 12c emmanchées dans des alésages prévus dans les cornes 50 et 51 respective- ment. Eventuellement, ces articulations peuvent comporter des épaulements en élastomère 121 et 122, l'ensemble étant serré par une vis traversante 14 et un écrou 20.

Suivant un mode particulier de réalisation illustré sur la figure 4, l'un 8 des trois bras transversaux de guidage 7, 8, 9 de la roue 3, dit bras supérieur avant, est relié de façon articulée sur le support 5 de roue 3, sur la corne supérieure précitée 50.

Il va être procédé à travers ce qui suit à une brève description du fonctionnement du dispositif de suspension de l'invention en référence aux figures.

L'application du freinage sur la roue 3 engendre un effort horizontal au sol S dans le plan longitudinal médian P de la roue 3. Or, la réaction au freinage ne peut être transmise à la caisse du véhicule que par l'articulation 12a via le bras 12. Si l'on se reporte à la figure 1, on voit que le plan R, qui contient les articulations 12b et 12c, ainsi que l'articulation sur caisse 12a, contient aussi le vecteur force correspondant à l'effort de freinage au sol. On comprend donc que les réactions au freinage sont absorbées par le bras 12 et les articulations 12a, 12b, 12c et qu'aucun couple parasite n'est engendré sur les bras transversaux 8 et 9.

Si en outre, l'axe d'articulation du bras 12 sur la caisse 6 du véhicule est perpendiculaire au plan R, les forces agiront radialement sur l'articulation 12a, ce qui rend inutile la présence de butées latérales sur cette articulation.

Et si de plus l'axe précité 19 est incliné en direction du plan transversal médian Q de la roue 3, le point d'intersection de l'axe 19 avec le sol S se rapprochant du centre de la surface de contact du pneumatique 3 avec le sol S, le support 5 se trouvera compacté, notamment au niveau de la corne inférieure 51.

Et enfin, dans le cas avantageux où la corne supérieure 50 du support 5 de la roue 3 fait office de palier d'articulation pour le bras transversal de guidage supérieur avant 8, le décalage de l'articulation en question vers l'extérieur de la roue 3 et vers l'intérieur du véhicule en résultant permettra une libération supplémentaire de l'espace situé au centre de la roue.

On a donc réalisé grâce à l'invention un dispositif de suspension de roue de véhicule du type multibras permettant une amélioration notable de la stabilité du véhicule, notamment au freinage, par le fait que le couple de réaction au freinage ne produit plus aucun effet sur les organes de guidage des roues, évitant de ce fait les microbraquages indésirables se produisant dans les dispositifs de l'art antérieur, ceci en libérant la partie centrale de la roue.

On notera que la solution proposée par l'invention peut s'appliquer à des types différents de trains de roues tels que ceux décrits par exemple dans le brevet FR-A-2588217 et la demande de brevet français 91 03402 mentionnés ci-dessus.

Bien entendu, l'invention n'est nullement limitée aux modes de réalisation décrits et illustrés qui n'ont été donnés qu'à titre d'exemples.

C'est ainsi par exemple qu'un agencement différent pour l'articulation du bras de réaction sur le support de roue procurant le même résultat pourrait être envisagé et, de façon générale, tout type de liaison articulée permettant d'introduire des efforts en deux points situés sur l'axe de cette articulation, sans sortir du cadre de l'invention.

## Revendications

1. Dispositif de suspension, notamment de suspension arrière multibras pour véhicule automobile, du type comprenant un bras de réaction aux efforts tels que les efforts de freinage, ledit bras étant articulé par l'une de ses extrémités sur la caisse du véhicule et par son extrémité opposée à un support de roue, dans lequel l'axe d'articulation (19) du bras de réaction précité (12) sur le support de roue précité (5) est incliné en direction du plan longitudinal médian (P) de la roue (3) et coupe la surface de roulement (S) en un point (A) situé au voisinage ou dans ce plan longitudinal médian (P) de la roue (3) de façon que sous l'effet des forces de freinage, le couple de réaction engendrant le pivotement de la roue autour dudit axe est supprimé, annulant de ce fait les risques de microbraquages de la roue, ledit axe d'articulation (19) étant en outre incliné par rapport à un plan transversal vertical (Q), caractérisé en ce que l'axe d'articulation (19) du bras de réaction précité (12) sur le support (5) de roue (3) est incliné vers le plan transversal médian (Q) de la roue (3) contenant l'axe de roue (3) et coupe les plans longitudinal (P) et transversal (Q) de la roue (3) sensiblement au centre de l'aire de contact du pneumatique avec le sol.

2. Dispositif selon la revendication 1, caractérisé en ce que le bras de réaction précité (12) est articulé sur la caisse (6) du véhicule en un point situé au voisinage ou bien dans le plan longitudinal (R) du véhicule contenant l'axe d'articulation (19) du bras de réaction précité (12) sur le support (5) de roue (3) précité.

3. Dispositif selon la revendication 1 ou 2, caractérisé en ce que l'axe d'articulation (120) du bras de réaction précité (12) sur la caisse du véhicule (6) coupe orthogonalement ou sensiblement orthogonalement le plan longitudinal (R) du véhicule contenant l'axe d'articulation (19) du bras de réaction (12) sur le support (5) de roue (3).

4. Dispositif selon l'une quelconque des revendications précédentes, caractérisé en ce que le bras de réaction précité (12) est relié de façon articulée au support (5) de roue (3) en deux points séparés (12b, 12c) définissant l'axe précité (19).

5. Dispositif selon l'une quelconque des revendications précédentes, caractérisé en ce que le support (5) de roue (3) comporte deux parties formant cornes (50, 51) recevant l'axe d'articulation (19) du bras de réaction (12) sur le support (5) de roue (3).

6. Dispositif selon l'une quelconque des revendications 4 et 5, caractérisé en ce qu'il comprend un bras transversal (8) de guidage de la roue (3) relié de façon articulée au support (5) au niveau de l'un des deux points d'articulation (12b, 12c) du bras de réaction (12) sur le support précité (5).

## Claims

1. Suspension device in particular rear multiple-link suspension for automotive vehicle, of the type comprising an arm for reaction to forces such as braking forces, the said arm being pivotally connected with one of its ends onto the body of the vehicle and with its opposite end onto a wheel support, wherein the pivot axis (19) of the aforesaid reaction arm (12) on the aforesaid wheel support (5) is inclined towards the longitudinal middle plane (P) of the wheel (3) and intersects the rolling surface (S) at a point (A) located in the vicinity of or in this longitudinal middle plane (P) of the wheel (3) so that under the effect of the braking forces, the reaction torque, generating the pivoting of the wheel about the said axis, is suppressed, thereby nullifying the risks of steering microangles of the wheel, the said pivot axis (19) being moreover inclined with respect to the transverse vertical plane (Q), characterized in that the axis (19) for pivoting the aforesaid reaction arm (12) onto the support (5) of the wheel (3) is inclined towards the transverse middle plane (Q) of the wheel (3) containing the axis of the wheel (3) and intersects the longitudinal and transverse planes (P) and (Q) of the wheel (3) substantially at the centre of the contact area of the pneumatic tyre with the ground.

2. Device according to claim 1, characterized in that the aforesaid reaction arm (12) is pivotally connected onto the body (6) of the vehicle at a point located either in the vicinity or in the longitudinal plane (R) of the vehicle containing the axis (19) for pivoting the aforesaid reaction arm (12) onto the aforesaid support (5) of the wheel (3).

3. Device according to claim 1 or 2, characterized in that the axis (120) for pivoting the aforesaid reaction arm (12) onto the body of the vehicle (6) orthogonally or substantially orthogonally intersects the longitudinal plane (R) of the vehicle containing the axis (19) for pivoting the reaction arm (12) onto the support (5) of the wheel (3).

4. Device according to any one of the foregoing claims, characterized in that the aforesaid reaction arm (12) is pivotally connected to the support (5) of the wheel (3) at two separate points (12b, 12c) defining the aforesaid axis (19).

5. Device according to any one of the foregoing claims, characterized in that the support (5) of the wheel (3) comprises two portions forming lugs (50, 51) receiving the axis (19) for pivoting the reaction arm (12) onto the support (5) of the wheel (3).

6. Device according to any one of claims 4 and 5, characterised in that it comprises a transverse link (8) for guiding the wheel (3), pivotally connected to the support (5) at the level of one of the two points (12b, 12c) for pivoting the reaction arm (12) onto the aforesaid support (5).

## Patentansprüche

1. Aufhängungsvorrichtung, insbesondere hintere Mehrlenkeraufhängung für ein Kraftfahrzeug, der Gattung mit einem Arm zum Ansprechen auf Kräfte, wie die Bremskräfte, wobei der besagte Arm mit dem einen seiner Enden an dem Wagenkasten des Fahrzeuges und mit seinem entgegengesetzten Ende an dem Radträger angelenkt ist, bei welcher die Achse (19) zur Anlenkung des vorgenannten Rückwirkungsarmes (12) an dem vorgenannten Radträger (5) in Richtung auf die Längsmittelebene (P) des Rades (3) geneigt ist und die Rollfläche (S) an einem in der Nachbarschaft dieser Längsmittelebene (P) des Rades (3) oder in dieser gelegenen Punkt (A) schneidet, so daß, unter der Wirkung der Bremskräfte, das, das Verschwenken des Rades um die besagte Achse herum erzeugende Rückwirkungsmoment wegfällt und die Gefahren von Mikrolenkungsausschlägen des Rades deshalb beseitigt werden, wobei die besagte Gelenkachse (19) ausserdem in bezug auf die senkrechte Querebene (Q) geneigt ist, dadurch gekennzeichnet, daß die Achse (19) zur Anlenkung des vorgenannten Rückwirkungsarmes (12) an dem Träger (5) des Rades (3) zur die Radachse (3) enthaltenden Mittelquerebene (Q) des Rades (3) geneigt ist und die Längsebene (P) und die Querebene (Q) des Rades (3) etwa im Mittelpunkt der Berührungsfläche des Luftreifens mit dem Erdboden schneidet.

2. Vorrichtung nach Anspruch 1, dadurch gekennzeichnet, daß der vorgenannte Rückwirkungsarm (12) an dem Wagenkasten (6) des Fahrzeuges an einem im Bereich der die Achse (19) zur Anlenkung des vorgenannten Rückwirkungsarmes (12) an dem vorgenannten Träger (5) des Rades (3) enthaltenden Längsebene (R) des Fahrzeuges oder in dieser gelegenen Punkt angelenkt ist.

3. Vorrichtung nach Anspruch 1 oder 2, dadurch gekennzeichnet, daß die Achse (120) zur Anlenkung des vorgenannten Rückwirkungsarmes (12) an dem Fahrzeugkasten (6), die die Achse (19) zur Anlenkung des Rückwirkungsarmes (12) an dem Träger (5) des Rades (3) enthaltende Längsebene (R) des Fahrzeuges rechtwinklich oder etwa rechtwinklich schneidet.

4. Vorrichtung nach irgendeinem der vorangehenden Ansprüche, dadurch gekennzeichnet, daß der vorgenannte Rückwirkungsarm (12) in gelenkiger Weise mit dem Träger (5) des Rades (3) an zwei die vorgenannte Achse (19) bestimmenden getrennten Punkten (12b, 12c) verbunden ist.

5. Vorrichtung nach irgendeinem der vorangehenden Ansprüche, dadurch gekennzeichnet, daß der Träger (5) des Rades (3) zwei die Achse (19) zur Anlenkung des Rückwirkungsarmes (12) an dem Träger (5) des Rades (3) aufnehmenden Ansätze bildenden Teile (50, 51) aufweist.

6. Vorrichtung nach irgendeinem der Ansprüche 4 und 5, dadurch gekennzeichnet, daß sie einen Querlenker (8) zur Führung des Rades (3) umfaßt, der in gelenkiger Weise mit dem Träger (5) in der Höhe des einen der beiden Punkte (12b, 12c) zur Anlenkung des Rückwirkungsarmes (12) an dem vorgenannten Träger (5) verbunden ist.
